# DEMANDE DE BREVET EUROPEEN

(11) **EP 2 757 530 A1**
(43) Date de publication de la demande: **23.07.2014**
(21) Numéro de dépôt: 14151002.4
(22) Date de dépôt: 13.01.2014
(51) Int. Cl.: G06T 7/20

(54) **Procédé et dispositif de détection de chute par analyse d'images**

(30) Priorité: 17.01.2013 FR 1350416
(71) Demandeur: Cash Systems Security, 83700 Saint-Raphael (FR)
(72) Inventeur: Larbi, Ramzi, 06200 Nice (FR)
(74) Mandataire: Novagraaf Technologies

(57) **Abrégé**

La présente invention se rapporte à un procédé de détection de chute d'une personne par analyse d'un flux d'images vidéo provenant d'un dispositif de prise d'images, comprenant :
• Acquisition (21) d'images successives d'une scène déterminée;
• sélection (23, 25, 27) d'au moins un point de la scène dans lesdites images ;
• détermination du mouvement (29) de chaque point sélectionné par analyse du déplacement dudit point dans les images successives sous forme d'une succession temporelle de vecteurs orientés proportionnels à la vitesse instantanée du mouvement dudit point ;
• calcul (31) de l'accélération instantanée de chaque point associée à chaque vecteur représentant la vitesse instantanée ;
• détection d'une chute (33) lorsque la vitesse instantanée déterminée est supérieure à une vitesse de seuil prédéfinie et l'accélération instantanée est supérieure à une accélération de seuil prédéfinie.

## Description

### Domaine technique

La présente invention se rapporte à un procédé, un produit programme d'ordinateur et un dispositif de détection de chute par analyse d'images.

### Etat de la technique

Avec l'augmentation de la population des personnes en perte d'autonomie, ou vivant seules, il devient de plus en plus important de détecter les chutes potentielles de celles-ci lorsqu'elles sont isolées dans leurs chambres ou appartements.

Pour résoudre ce problème, on connait actuellement des dispositifs se présentant sous forme de collier ou de bracelet et ayant un bouton permettant au porteur d'alerter un centre d'appel en cas de problème, tel qu'une chute. L'inconvénient de ce type de dispositif est qu'il devient inutile en cas de perte de conscience du porteur.

Des dispositifs similaires dit « d'homme mort » détecte automatiquement une chute et/ou une position couchée immobile. Mais ces dispositifs étant contraignants à mettre, ils sont très souvent « oubliés » et de ce fait ne peuvent pas remplir leur office.

Parmi les autres dispositifs, il existe également des tapis comportant des détecteurs et qui sont installés autour du lit d'une personne. Ces tapis ont un coût relativement importants et leur installation étant souvent complexe, ils ne sont utilisés que dans des maisons de soins ayant une proportion importante de malades à surveiller.

Enfin depuis de nombreuses années, il a été imaginé d'utiliser des caméras de surveillance.

Cependant, tous les systèmes basés sur une centralisation des images dans un centre de surveillance dans lequel du personnel scrute les images se heurte à ce que cela constitue une intrusion inacceptable dans la vie privée d'une personne.

Aussi de nombreuses recherches ont porté sur la détection des chutes par analyse automatique d'images. Cependant, aucun résultat n'a permis à ce jour de mettre en place un système fonctionnel, soit parce que les moyens de calcul nécessaires sont trop importants, soit par manque de fiabilité parce que la détection génère trop de faux positifs, ou de faux négatifs.

Il existe donc un réel besoin d'un procédé et d'un dispositif de détection de chute par analyse d'images palliant ces défauts, inconvénients et obstacles de l'art antérieur, en particulier d'un procédé permettant de maîtriser la puissance de calcul nécessaire, et donc réduire les coûts tout en ayant une fiabilité importante.

### Description de l'invention

Pour résoudre un ou plusieurs des inconvénients de l'art antérieur, selon un aspect de l'invention, un procédé de détection de chute d'une personne par analyse d'un flux d'images vidéo provenant d'un dispositif de prise d'images, comprend :
- acquisition d'images successives d'une scène déterminée ;
- sélection d'au moins un point de la scène dans lesdites images ;
- détermination du mouvement de chaque point sélectionné par analyse du déplacement dudit point dans les images successives sous forme d'une succession temporelle de vecteurs orientés proportionnels à la vitesse instantanée du mouvement dudit point ;
- calcul de l'accélération instantanée de chaque point associée à chaque vecteur représentant la vitesse instantanée ;
- détection d'une chute lorsque la vitesse instantanée déterminée est supérieure à une vitesse de seuil prédéfinie et l'accélération instantanée est supérieure à une accélération de seuil prédéfinie.

Selon des modes de réalisation particuliers utilisables seuls ou en combinaison :
- la chute est détectée lorsque, en outre, l'orientation du vecteur de vitesse instantanée est incluse dans un secteur directionnel prédéfini ;
- plusieurs zones d'intérêts sont définis à l'intérieur de la scène de sorte que la détection de chute n'est réalisée que pour les mouvements à l'intérieur de ces zones d'intérêts ;
- une chute n'est détectée que si la détection de chute est réalisée pour un nombre de points supérieur à une valeur prédéterminée ;
- une alarme est déclenchée lorsque, en outre, aucun mouvement n'est détecté pendant une période déterminée ;
- la personne portant un bracelet de détection de chutes, une alarme est déclenchée lorsque qu'une chute détectée par analyse du flux vidéo est confirmée par le bracelet ;
- outre l'alarme, un message accompagné d'une photo de la scène est envoyé ;
- la détection de chute ayant lieu en temps réel, le vecteur de vitesse et l'accélération de chaque point est calculé pour chaque nouvelle image en prenant comme paramètre la variation de la position du point dans la nouvelle image et les images précédentes.

Selon un deuxième aspect de l'invention, un produit programme d'ordinateur comprend des instructions de programme adaptées pour mettre en oeuvre le procédé ci-dessus lorsque le produit programme est exécuté sur un ordinateur.

Selon un troisième aspect de l'invention, un système de détection de chute d'une personne par analyse d'un flux d'images vidéo, comprend :
- un dispositif d'acquisition d'images successives d'une scène déterminée ;
- un moyen de sélection d'au moins un point de la scène dans lesdites images ;
- un calculateur du mouvement de chaque point sélectionné par analyse du déplacement dudit point dans les images successives sous forme d'une succession temporelle de vecteurs orientés proportionnels à la vitesse instantanée du mouvement dudit point ;
- un calculateur de l'accélération instantanée de chaque point associée à chaque vecteur représentant la vitesse instantanée ;
- un moyen de détection d'une chute lorsque la vitesse instantanée déterminée est supérieure à une vitesse de seuil prédéfinie et l'accélération instantanée est supérieure à une accélération de seuil prédéfinie.

D'autres avantages pourront encore apparaître à l'homme du métier à la lecture des exemples ci-dessous, illustrés par les figures annexées, donnés à titre illustratif.

### Brève description des figures

- La figure 1 représente l'architecture d'un système de détection de chute selon un mode de réalisation de l'invention ;
- La figure 2 représente un procédé de détection de chute selon un premier mode de réalisation, tel que mis en oeuvre par le système de la figure 1 ;
- La figure 3 représente un exemple de génération de vecteurs de vitesse ; et
- La figure 4 représente un procédé de détection de chute selon un deuxième mode de réalisation.

### Modes de réalisation

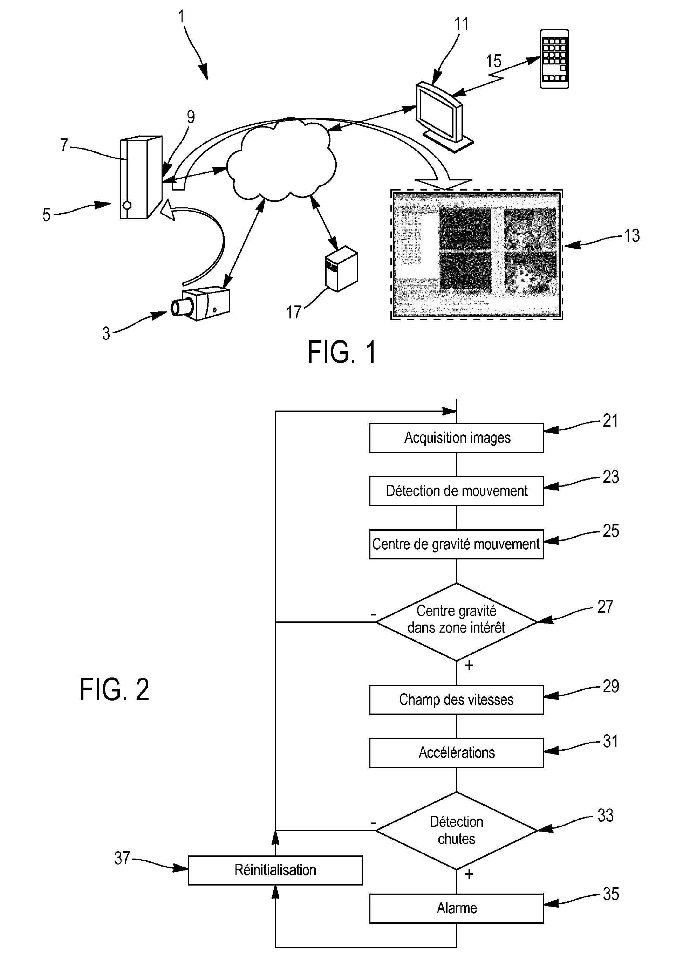

En référence à la figure 1, un système de détection de chute 1 comprend un dispositif d'acquisition d'images 3 tel que, par exemple, une caméra ip. Cette caméra 3 est connectée à un calculateur 5. Le calculateur 5 comprend des moyens d'analyse d'images 7 et des moyens de connexion 9 à une station de surveillance 11. La station de surveillance 11 comprend des moyens d'affichage d'images 13 ainsi que des moyens d'envoi de messages 15 ainsi qu'un serveur d'enregistrement 17.

Le mode de fonctionnement du système 1 selon un premier mode de réalisation est le suivant.

Le dispositif d'acquisition d'images 3 acquiert, étape 21, un flux d'images vidéo. Ce flux vidéo peut se présenter sous forme d'un fichier vidéo, par exemple au format avi, ou provenir directement d'une caméra telle qu'une webcam.

Quelque soit l'origine et le format du flux vidéo, celui-ci est transformé, étape 23, en une succession d'images en niveaux de gris. On notera que ces traitements préliminaires peuvent être réalisés avec des logiciels bien connus comme la bibliothèque « FFDShow » et/ou le décodeur « FFMpeg ».

A l'étape 23, une détection de mouvement est réalisée, par exemple, par analyse d'images triphasées. Ainsi, par exemple, le niveau de gris de chaque pixel est comparé entre deux images successives. En effet, si le niveau de gris varie, cela peut laisser supposer qu'il y a eu un déplacement de l'objet capté par le pixel.

Par la suite, on appelera « point » un élément simple de la scène captée et « pixel » son correspondant sur une image : quand un point est immobile, il se retrouve en permanence sur le même pixel (au sens élément de la matrice formant image) alors qu'un point mobile se déplace sur différents pixels sur les images successives.

Le dispositif d'acquisition d'images 3 étant fixe, il capte une scène déterminée, par exemple une chambre. A l'intérieur des images acquises, il est donc possible de prédéfinir une ou des zones d'intérêt particulières dans lesquelles seule la détection de chute sera réalisée. En effet, si par exemple les images comprennent une partie du plafond de la chambre, on comprend bien que cette zone ne présente aucun intérêt pour détecter la chute éventuelle de l'occupant de cette pièce.

Aussi, à l'étape 25, on détermine le centre de gravité, ou le barycentre, du mouvement détecté, et on localise, étape 27, ce centre de gravité par rapport aux zones d'intérêt.

La suite du traitement est alors effectuée seulement si le centre de gravité est à l'intérieur de la ou des zones d'intérêt prédéfinies, ce qui a l'avantage de diminuer les calculs à réaliser.

A l'étape 29, on analyse les changements d'images dues au mouvement pendant un intervalle de temps dt, par exemple le temps entre deux images successives, pour représenter dans une image en deux dimensions le champ de vitesse que représente le mouvement d'un point en trois dimensions. A cette fin, on peut utiliser l'algorithme « Optical Flow ». Ainsi pour un point, à son pixel d'une image correspondant est associé un vecteur représentant la direction et l'intensité de la vitesse instantanée de ce point au moment correspondant à la prise de vue de l'image. On notera que ce calcul est basé sur deux hypothèses qui, dans la pratique, sont suffisamment vraies pour ne pas créer d'erreur nuisible à la fiabilité du système à savoir que la luminosité observé d'un point est constante pendant la durée d'observation et que les points situés à proximité se déplacent de la même manière et dans le même sens (lissage des vitesses).

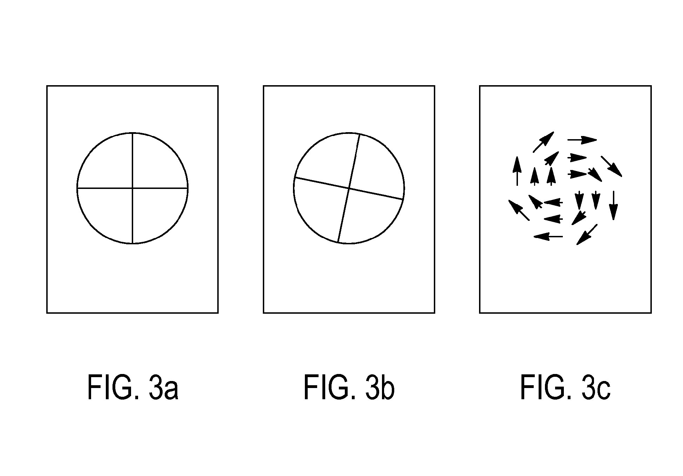

La figure 3 illustre cette étape, avec l'image d'un cercle rotatif ayant une première position en (a) puis une seconde position en (b). L'ensemble des vecteurs de vitesse résultant est représenté en (c).

Classiquement, à l'étape 31, l'accélération à un instant donné du point est calculée en se basant sur l'évolution temporelle des vitesses instantanées.

Ainsi, à la fin de l'étape 31, pour chaque point analysé, on connait à tout instant, sa vitesse (intensité et orientation) et son accélération.

Si, pour ce(s) point(s), la vitesse dépasse, en intensité, une vitesse de seuil prédéfinie et si l'accélération dépasse une accélération de seuil prédéfinie, une chute est détectée, étape 33.

La détection de chute déclenche, étape 35, une alarme.

Cette alarme est un message d'alarme à une centrale de vidéosurveillance et/ou l'envoi d'une photographie sur un téléphone.

Après une temporisation de 5 secondes typiquement, le système se réinitialise, étape 37, et la détection se poursuit à partir de l'étape 23.

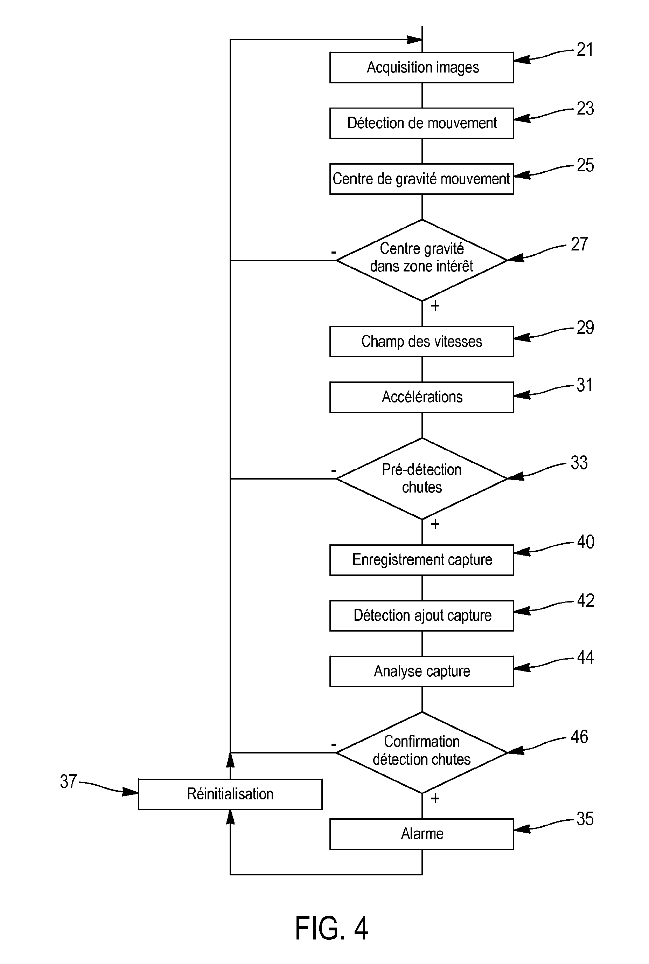

La figure 4 illustre un mode de réalisation complémentaire mais indépendant du mode de réalisation précédent, pour lequel les éléments analogues au mode de réalisation précédent sont repérés par des références identiques, et ne sont donc pas décrits à nouveau. Dans ce mode de fonctionnement du système 1 selon un deuxième mode de réalisation, le calculateur 5 est muni d'une base de données locale et les moyens d'analyse d'image 7 sont propres à mettre en oeuvre un logiciel de reconnaissance de formes. Comme illustré sur la figure 4, si une chute est pré-détectée à l'issue de l'étape 33, le dispositif d'acquisition d'images 3 transmet une capture de la dernière image acquise au serveur d'enregistrement 17 qui enregistre cette capture, étape 40.

Dans un exemple de réalisation particulier, un contour délimitant la zone de l'image associée à l'emplacement supposé de la personne est ajouté sur la capture d'image enregistrée sur le serveur 17.

Dans un autre exemple de réalisation particulier, une copie de la capture de la dernière image acquise est créée dans le serveur d'enregistrement 17, et un contour délimitant la zone de l'image associée à l'emplacement supposé de la personne est ajouté sur cette copie.

A l'issue de l'étape 40, un processus dédié du calculateur 5 détecte l'ajout de la capture d'image dans le serveur d'enregistrement 17, étape 42. Cette phase de surveillance du serveur 17 par le processus dédié est automatique et est effectuée selon un mécanisme connu de processus dormant. Plus précisément, le processus dédié est mis en sommeil entre deux ajouts consécutifs de captures d'images. Le processus ne s'active que lorsqu'une nouvelle capture d'image est ajoutée dans le serveur 17. Ceci permet de réduire la consommation de ressources informatiques nécessaires à cette surveillance et d'améliorer ainsi la performance globale du procédé.

A l'issue de l'étape 42, la capture d'image enregistrée sur le serveur 17 est envoyée par le serveur 17 aux moyens d'analyse d'images 7.

A l'étape 44 suivante, la capture d'image est sauvegardée dans la base de données locale du calculateur 5, puis les moyens d'analyse d'images 7 mettent en oeuvre un logiciel classique de reconnaissance de formes, un tel logiciel étant paramétré de sorte à détecter une forme précise sur la capture d'image. Dans l'exemple de réalisation particulier dans lequel la capture d'image est munie d'un contour délimitant la zone de l'image associée à l'emplacement supposé de la personne, le logiciel de reconnaissance de formes est paramétré de sorte à détecter si la forme du contour correspond ou non à une personne ayant chuté.

En variante, dans l'exemple de réalisation particulier dans lequel une copie de la capture d'image est créée dans le serveur d'enregistrement 17, la copie de la capture d'image est envoyée par le serveur 17 aux moyens d'analyse d'images 7 à l'issue de l'étape 42, puis est sauvegardée dans la base de données locale du calculateur et est analysée par les moyens d'analyse d'images 7 au cours de l'étape 44.

Ainsi, à la fin de l'étape 44, si une forme correspondant à une personne ayant chuté est détectée, la détection de chute est confirmée, étape 46.

La confirmation de la détection de chute déclenche l'étape 35 d'alarme, autrement dit l'envoi d'un message d'alarme à une centrale de vidéosurveillance.

En variante ou en complément, le déclenchement de l'étape 35 d'alarme correspond à l'envoi de la capture d'image ou de la copie de cette capture sur un téléphone, et/ou sur une messagerie de courrier électronique, et/ou sur un ordinateur comprenant un logiciel FTP (de l'anglais File Transfer Protocol), et/ou sur un service web, notamment un service web internet, et/ou sur un système de gestion de contenu.

Une fois l'envoi effectué, la capture d'image ou la copie de cette capture est sauvegardée dans la base de données locale du calculateur 5 pour indiquer la fin du traitement de la photographie.

Après une temporisation de 5 secondes typiquement, l'étape 37 de réinitialisation est mise en oeuvre, et la détection se poursuit à partir de l'étape 23.

Ce mode de réalisation illustré sur la figure 4 permet de réduire avantageusement le nombre de faux positifs, et d'améliorer d'autant plus la fiabilité du système de détection.

En variante, dans chacun des deux modes de réalisation précédents, la chute n'est en outre détectée que si un nombre de points supérieur à une valeur prédéterminée remplit les conditions de vitesse et d'accélération. Ainsi, par exemple, on ne déclenchera l'alarme que si 5 points et plus remplissent la condition de détection.

Cette condition peut être complétée par une seconde condition basée sur le nombre d'images ayant les critères de chute. Par exemple, l'alarme n'est déclenchée que si au moins 5 points remplissent la condition de détection sur au moins 50 images consécutives.

Dans une deuxième variante, outre l'analyse de l'intensité de la vitesse, l'orientation de celle-ci est également prise en compte. Ainsi la détection de chute vérifie que l'orientation de la vitesse est à l'intérieur d'un secteur directionnel prédéfini. Par exemple, il est vérifié que les vitesses sont orientées vers le bas. Cela permet avantageusement d'éviter des détections parasites liées, par exemple, au lever d'un bras, ou à un déplacement horizontal rapide.

Dans une troisième variante, avant de déclencher une alarme, il est vérifié si la chute est suivie, ou non, d'un mouvement. Dans le premier cas, cela peut être le signe que la personne est capable d'autonomie alors que l'absence de mouvement peut être le signe d'une perte de connaissance.

Dans une quatrième variante, la personne surveillée portant un bracelet de détection de chute, la détection par analyse d'image est corrélée avec le signal éventuellement émis par le bracelet pour déclencher une alarme.

Dans une cinquième variante, la détection de chute est faite en temps réel, de façon à ne pas perdre de temps pour déclencher une alarme éventuelle. De ce fait, le traitement est fait au fur et à mesure de l'acquisition des images du flux vidéo. En conséquence, les analyses de mouvement sont basées sur la dernière image acquise et les images précédentes.

Il est à noter que cette alarme peut prendre plusieurs formes. Cela peut prendre la forme d'un affichage sur un écran dans une salle de surveillance et/ou l'envoi d'un message à une personne déterminée, ce message étant avantageusement associé à une image de la chute permettant de vérifier la pertinence de l'alarme.

## Revendications

1. Procédé de détection de chute d'une personne par analyse d'un flux d'images vidéo provenant d'un dispositif de prise d'images, comprenant :
• Acquisition (21) d'images successives d'une scène déterminée ;
• sélection (23, 25, 27) d'au moins un point de la scène dans lesdites images ;
• détermination du mouvement (29) de chaque point sélectionné par analyse du déplacement dudit point dans les images successives sous forme d'une succession temporelle de vecteurs orientés proportionnels à la vitesse instantanée du mouvement dudit point ;
• calcul (31) de l'accélération instantanée de chaque point associée à chaque vecteur représentant la vitesse instantanée ;
• détection d'une chute (33) lorsque la vitesse instantanée déterminée est supérieure à une vitesse de seuil prédéfinie et l'accélération instantanée est supérieure à une accélération de seuil prédéfinie.

2. Procédé selon la revendication 1, **caractérisé en ce qu'**une capture de la dernière image acquise de la scène est enregistrée, et **en ce qu'**une chute n'est détectée que si la capture d'image enregistrée ou une copie de ladite capture d'image est identifiée comme une scène de chute par un logiciel de reconnaissance de formes.

3. Procédé selon la revendication 1 ou 2, **caractérisé en ce que** la chute est détectée lorsque, en outre, l'orientation du vecteur de vitesse instantanée est incluse dans un secteur directionnel prédéfini.

4. Procédé selon l'une quelconque des revendications précédentes, **caractérisé en ce que** plusieurs zones d'intérêts sont définis à l'intérieur de la scène de sorte que la détection de chute n'est réalisée que pour les mouvements à l'intérieur de ces zones d'intérêts.

5. Procédé selon l'une quelconque des revendications précédentes, **caractérisé en ce qu'**une chute n'est détectée que si la détection de chute est réalisée pour un nombre de points supérieur à une valeur prédéterminée.

6. Procédé selon l'une quelconque des revendications précédentes, **caractérisé en ce qu'**une alarme est déclenchée lorsque, en outre, aucun mouvement n'est détecté pendant une période déterminée.

7. Procédé selon l'une quelconque des revendications précédentes, **caractérisé en ce que** la personne portant un bracelet de détection de chutes, une alarme est déclenchée lorsque qu'une chute détectée par analyse du flux vidéo est confirmée par le bracelet.

8. Procédé selon l'une quelconque des revendications 6 ou 7, **caractérisé en ce que**, outre l'alarme, un message accompagné d'une photo de la scène est envoyé.

9. Procédé selon l'une quelconque des revendications précédentes, **caractérisé en ce que** la détection de chute ayant lieu en temps réel, le vecteur de vitesse et l'accélération de chaque point est calculé pour chaque nouvelle image en prenant comme paramètre la variation de la position du point dans la nouvelle image et les images précédentes.

10. Produit programme d'ordinateur comprenant des instructions de programme adaptées pour mettre en oeuvre le procédé selon l'une quelconque des revendications 1 à 8 lorsque le produit programme est exécuté sur un ordinateur.

11. Système de détection de chute d'une personne par analyse d'un flux d'images vidéo, comprenant :
• un dispositif (3) d'acquisition d'images successives d'une scène déterminée ;
• un moyen de sélection d'au moins un point de la scène dans lesdites images ;
• un calculateur du mouvement de chaque point sélectionné par analyse du déplacement dudit point dans les images successives sous forme d'une succession temporelle de vecteurs orientés proportionnels à la vitesse instantanée du mouvement dudit point ;
• un calculateur de l'accélération instantanée de chaque point associée à chaque vecteur représentant la vitesse instantanée ;
• un moyen de détection d'une chute lorsque la vitesse instantanée déterminée est supérieure à une vitesse de seuil prédéfinie et l'accélération instantanée est supérieure à une accélération de seuil prédéfinie
